# EUROPEAN PATENT APPLICATION

(11) **EP 1 592 203 A1**
(43) Date of publication of application: **02.11.2005**
(21) Application number: 05290299.6
(22) Date of filing: 10.02.2005
(51) Int. Cl.: H04L 29/06

(54) **Microserver test port retrofit kit**

(30) Priority: 27.04.2004 US 832725
(71) Applicant: UNITED TECHNOLOGIES CORPORATION, Hartford, Connecticut 06103 (US)
(72) Inventor: Loda, David C., Boldon, CT 06043 (US); Kennedy, Campbell, Santa Monica, CA 90403 (US); Paquet, Michel D., Wethersfield, CT 06109 (US); Dolan, William, Wolcott, CT 06716 (US); Poisson, Richard, Avon, CT 06001 (US); Stickling, Bjorn, Mississauga, Ontario L5N 7NS (CA); Macchia, Enzo, Kleinburg, Ontario L0J 1C0 (CA); Qadri, Samad, Brossard, Ontario J4Y 2L2 (CA)
(74) Representative: Burbaud, Eric

(57) **Abstract**

An integrated system for monitoring a deployed product on a movable platform, gathering data about the deployed product, and disseminating the data about the deployed product is disclosed. The system includes a server located on the movable platform capable of communication with the server from a remote location. The server communicates with a source of data about the deployed communicates with a source of data about the deployed product. The system further includes a portal onto which data gathered by the server may be downloaded and with which one can upload information to the server. The server may be connected to an existing PC test port of a controller pre-existing onboard the deployed product to easily retrofit existing machines to be web-enabled.

## Description

### Cross-Reference to the Related Application

This is a continuation-in-part of U.S. patent application serial no. 10/155,593, filed on May 22, 2002, which claims priority to U.S. provisional patent application serial no. 60/337,926, filed on December 3, 2001, both of which are herein incorporated by reference.

### Field of the Disclosure

The present disclosure generally relates to integrated Internet systems and, more particularly, relates to the provision of an Internet portal on board a deployed product.

### Background of the Disdosure

There are three general types of maintenance for products. They are on-demand maintenance (usually when a product breaks), scheduled maintenance (based upon the best estimate of a manufacturer as to when something will wear out with normal usage), and condition based maintenance (maintenance that occurs when maximum usage is obtained from a part but just prior to part failure). On demand maintenance is self-explanatory. It is when a component fails and has to be repaired or replaced. This normally occurs as an end result of its operators not understanding its component life or the conditions of its use, and the highest costs, both physical and lost time, are associated with it. Unfortunately, it is also one of the most common types of maintenance. Scheduled maintenance is less costly but can be very wasteful. Depending upon the usage of a product, one may be replacing parts that still have a significantly useful life. This is also where corners tend to be cut by the customer when budgets become tight, and often leads back to the first type of maintenance described above. The third form of maintenance is condition-based maintenance and is the holy grail of maintenance in many industries. If a manufacturer or service organization can accurately ascertain the maximum life of a component based upon actual wear, tear, and usage, it could then allow for the optimized, just-in-time servicing and replacement of that component, thereby allowing for the user to gain maximum product life and to schedule the replacement at a non-critical time. As a result, a manufacturer utilizing condition based maintenance could better plan its spares production and save millions of dollars in unnecessary production, warehousing and inventory taxes.

There is however a catch to condition-based maintenance. A closed feedback loop system of information related to the use of each product must be provided. Without first-hand knowledge of how a product is being used after it is sold and deployed to the field, a manufacturer or service provider has no real way of knowing when components will wear out based on usage, and must therefore default back to using one or both of the first two types of maintenance described above. Operators are in the best position to gather this first hand knowledge, but most are too busy operating and making money with the product and have little time, money and/or inclination to attempt to capture this information to provide feedback to the manufacturer or service provider, even though it is in their own best interest to do so.

In an attempt to gather useful information from the field, a variety of methods have been used to try and solve the collection of product usage data. On the low end, customer surveys, feedback forms, and interaction with field support personnel have been the primary means of obtaining a rudimentary form of feedback. For complex and expensive products, such as aircraft engines, the most common form is that of paper-based operational logs. This is a highly manual and painful method of collecting operational information. Over the years, computer collection systems have tried to make this process easier, but they still require a great deal of manual intervention.

More recent advances have involved the incorporation of automated data recording devices onto products, such as engine data units (or EDUs), which are used on turbine engines, and which communicate with an electronic engine control (EEC) system and record operational data using a variety of sensors. However, it is still extremely difficult and costly to gather information from these data collection devices, as it must be done manually by mechanics in the field using specialized equipment or laptop computers temporarily cabled to the EDU or EEC and with which they usually have little familiarity or interest. The only other option is to wait until the product is returned to a shop environment for a major overhaul and repair, at which point the data from a preventative maintenance perspective is moot, and useful only from a post analysis or fleet average perspective.

A number of industries normally attempt to gather product usage intelligence through manual inspections and, more recently, laptop computer downloads performed concurrently with scheduled or on-demand maintenance service calls. This is normally accomplished by one of two methods: sending the service person to the product, bringing the product to a service center, or both. Examples of the former include products with fixed installations, such as elevators, HVAC systems, nuclear power plants, and large home appliances. Examples of the latter include automobiles, small home appliances, home electronics equipment, lawn-mowers, or anything small enough to be easily carried or shipped. Both methods are inefficient and result in significant down time.

With advances in low cost computing and the advent of wireless technologies and the Internet, companies are now looking at how they can collect product usage intelligence in an automated and remote fashion. Many of the systems which have evolved such as VHF frequency, cell phone, or wireless land-based data download methods, tend to be very expensive as have attempts at using emerging technologies to accomplish essentially the same thing, i.e., remote data file compression and download to a central location using a public or private network/Internet where the information can then be manually uncompressed and analyzed. As a result, the high cost associated with such methods restricts the application of wireless remote monitoring to high value products, such as jet aircraft and helicopters. Thus, there remains a need for a low cost, wireless system which accurately ascertains the condition of a deployed product based upon actual wear, tear, and usage and presents information about that condition to a user, a manufacturer, an operator, or any other interested party, that is deployable with the product and that provides greater flexibility and interaction than simple data downloading.

In addition to the above, it would be advantageous if a system were to be provided which would allow for existing deployed products, such as aircraft, to be retrofitted to have onboard Internet capabilities. Such a system would enable ground personnel at distant locales to access a website containing information related to a given aircraft, as well as enable two-way communication between the aircraft and the remote locations by way of the Internet. It would also be advantageous if such a retrofit option were to be provided at a minimum of cost, preferably, taking advantage of existing resources already onboard the aircraft.

### Summary of the Disclosure

In accordance with one aspect of the disclosure, a system for communicating with a deployed product is disclosed which may comprise a deployed product, an electronic controller positioned on the deployed product, and a microserver connected to a PC test port provided in the electronic controller. The microserver may receive data about the deployed product through the PC test port and host a web page through which the received data is accessible. The system may further include a computing device remote from the deployed product and adapted to wirelessly access the microserver web page.

In accordance with another aspect of the disclosure, a deployed product is disclosed which may comprise a machine, an electronic control box operatively associated with the operating machinery, and a microserver connected to a PC test port of the electronic control box. The microserver may host a web page and generate a wireless system around the deployed product.

In accordance with another aspect of the disclosure, a method of communicating with a deployed product is disclosed which may comprise connecting a microserver to a PC test port of an electronic control box of the deployed product, hosting a web page on the microserver, and accessing the web page wirelessly over the Internet.

In accordance with another aspect of the disclosure, a retrofit kit for a deployed product having an electronic controller with a test port is disclosed, comprising a microserver connected to the test port, wherein the microserver hosts a web page and generates a wireless system around the deployed product.

These and other aspects and features of the disclosure will become more readily apparent upon reading the following detailed description when taken in conjunction with the accompanying drawings.

### Brief Description of the Drawings

FIG. 1 is a schematic representation of an integrated system for monitoring, gathering data about, and disseminating data about a deployed product in accordance with one embodiment of the present disclosure;

FIG. 2 is a schematic representation of one embodiment of a controller of a deployed product retrofitted to include a microserver according to the teachings of the present disclosure; and

FIG. 3 is a block diagram illustrating one embodiment of a microserver test port retrofit kit system constructed in accordance with the teachings of the disclosure.

While the following disclosure is susceptible to various modifications and alternative constructions, certain illustrative embodiments thereof have been shown in the drawings and will be described below in detail. It should be understood, however, that there is no intention to limit the disclosure to the specific forms disclosed, but on the contrary, the intention is to cover all modifications, alternative constructions, and equivalents falling within the spirit and scope of the disclosure as defined by the appended claims.

### Detailed Description of the Disclosure

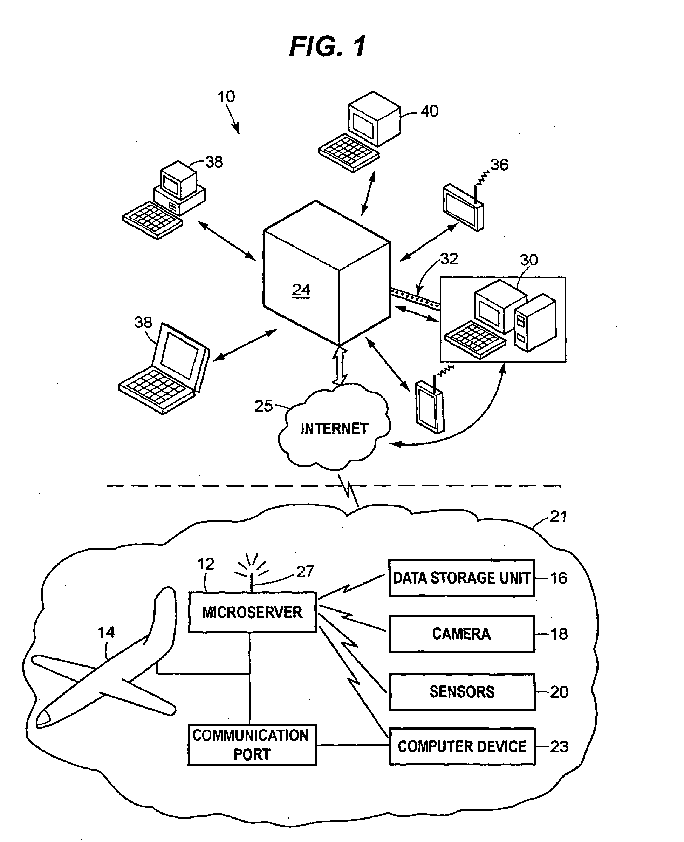

Referring now to FIG. 1, a system 10 is presented which is capable of monitoring a deployed product, gathering data about the deployed product, and disseminating the data to interested parties. It is also capable of monitoring and restricting access to its data, and can accept data for storage or integration within the product itself, such as firmware revision updates. As used herein, the term "deployed product" has broad applicability and refers to any product, component, or system on a variety of machines including, but not limited to, a vehicle, a HVAC system, or an elevator/escalator system, such as a propulsion system on a vehicle, a compartment of a vehicle, or a braking system for a vehicle, wherein the vehicle is any one of a number of movable devices including aircraft and elevator cars.

The system 10 includes a server 12 located on the deployed product or movable platform 14. The movable platform 14 may be a boat, an airplane, a spacecraft, an automobile, a truck, or any other entity that is movable with an airplane being depicted for ease of understanding. The server 12 may monitor the condition of and/or gather data about the deployed product in a number of ways. For example, the server 12 may be connected to or integrated with a vehicle data storage unit 16 which contains data about the deployed product. The server 12 may also be connected to a video camera 18, such as video web camera, to provide pictures, in real-time or on a delayed basis, of the deployed product. Still further, the server 12 may be connected to a number of sensors 20, such as a vibration sensor or a temperature sensor, which provide additional or environmental information about the condition of the deployed product.

The server 12 may be programmed in any suitable language known in the art to gather the data about the deployed product and present the data to interested parties in a desired format. For example, the server 12 may be used to host a web page which provides information about one or more deployed products on the movable platform. The web page may have a menu which allows an interested party to gain access to gathered data about a particular deployed product. The data about the deployed product(s) may be organized on the server 12 and presented in any desirable format or manner. The server 12 may also be programmed to allow an interested party to carry out diagnostic operations on the deployed product(s) and/or to upgrade software associated with the deployed product(s). By providing the server 12 on the deployed product 14, a wireless system or intranet 21 is provided around the entire deployed product 14 enabling wireless communication to any electronic device thereon as will be described in further detail herein.

While it is contemplated that the system 10 of the present disclosure would primarily be used to allow interested parties in remote locations to obtain information about a deployed product, there will be times when a mechanic or an engineer may want to interact with the server 12 while he or she is onboard the movable platform 14. To this end, the server 12 may be provided with a local USB or other communications port 22 for direct hook-up. A mechanic or engineer could then gain access to the server 12 by hooking up a promtop, laptop computer or another device 23 such as a video borescope or a bar code reader to the communications port 22. Other examples of communication ports through which access may be gained to server 12 include wireless peer-to-peer communication links. The mechanic or engineer could then conduct a desired diagnostic operation or even fix a problem with the deployed product. Similarly, any passenger on board the deployed product 14 could use his or her own computer device 23 to access the server 12 and thus the Internet 25, again as will be described in further detail herein.

The server 12 may comprise any suitable computer or processing unit known in the art. The server 12 may be a hand-held sized microserver using a Linux-based operating system or as will be described in further detail herein may be a self contained box adapted to be connected to a larger computing device. Further, the server 12 may be provided with its own web address, a firewall, and security protocols known only to selected individuals, such as the manufacturer of the deployed product.

In accordance with the present disclosure, the server 12 is capable of being accessed by interested parties via a portal 24 and the Internet or world wide web 25. To this end, the server 12 may have a communications device, such as a modem, built within it to allow communication between the server 12 and the portal 24. The communication device may allow for radio frequency communications such as cellular communication, satellite communication, and/or wireless communication between the server 12 and the portal 24. In addition, communications between the server 12 and the portal 24 may be achieved by optical means such as an infrared link.

The portal 24 is hosted by an external server which may be any suitable server known in the art. The server hosting the portal 24 also has appropriate communication means associated it to allow it to gain access to and be accessed by the server 12.

Data gathered by and stored on the server 12 may be downloaded to the portal 24 as desired. For example, the server 12 may be programmed to periodically download data to the server hosting the portal 24 or to download data on specific events such as when an aircraft lands or when a truck or automobile reaches a particular destination. The server 12 may also download data to the portal 24 upon the activation of a switch by an operator onboard the moving platform. Alternatively, the portal server may upload data to the microserver, such as product firmware revisions or technical manuals for access by interested parties. The server 12 may include an antenna 27 or the like to facilitate such wireless communication.

The portal 24 may be provided with a number of software tools called gadgets to automatically analyze, organize, and sort the data which has been received from the server 12. The data is preferably sorted so that different communities gain access to different portions of the data. For example, actual and potential customers of a vendor of a deployed product may form one community and have access to certain data, while support engineers and product designers may form a second community and have access to another form of the data. As can be seen from the foregoing discussion, the portal 24 offers great flexibility as to how and to whom the data is disseminated. Still further, the portal 24 provides virtual shared spaces which allow for the common space posting and access of information about a deployed product in a shared awareness between customers, support engineers, field operatives, and even product designers. The portal 24 may also be designed to provide chat rooms, bulletin boards, and on-line meeting capabilities where interested parties can communicate with each other.

One of the advantages to using the portal 24 is that its functionality can be carried out in a secure, user friendly, web-based environment. Members of a particular community can log in by presenting an identification and/or a password and gain access to current information about a deployed product. Another advantage to using the portal 24 is that it can be used to upload data, information, instructions, software, technical publications, diagnostic programs, etc. to the server 12. Thus, an engineer can perform diagnostic tests on a deployed product from a remote location using the Internet. Similarly, a service engineer or other temporary ground support personnel working on the deployed product, such as an aircraft, can gain access to a technical publication outlining how to repair a certain situation, for example, through the server 12. As the communication is two-way, access, upload, download, and execution of all such information and data can be performed at the deployed product or remote locations. The communication would be protected by suitable anti-hacking security protocols including but not limited to VPN and encryption.

Access to the portal 24 may be gained in a number of different ways by a variety of devices as described below. For example, an interested party can communicate with the portal 24 through his/her personal computer 38 and the web browser on the computer 38. The computer 38 may be a PC workstation at the office of a user or a laptop or PC at the home of user. Even a computer 40 in an Internet café may be used to gain access to the portal 24. A wireless PC tablet 36 on the shop floor of a manufacturer of the deployed product may also be used to communicate with the portal 24. The portal 24 may also be in communication with the internal network 30 of the manufacturer of or a vendor of the deployed product. When the portal 24 is to be in communication with the network 30, a secure data pipe 32 may be used for crawlers for automated data exchange. If desired, the portal 24 may communicate with the internal network 30 via a wireless PDA.

The system 10 may also be configured to allow the internal network 30 to communicate directly with the server 12 via the Internet by dialing up the web address for the server 12. When in such a configuration, a firewall may be provided between the internal network 30 and the server 12.

As can be seen from the foregoing discussion, the system 10 of the present disclosure has broad applicability and can be used for a wide variety of purposes. For example, as previously mentioned, the system 10 can be used by an engineer working for a manufacturer of the deployed product to gain access to the server 12 and to then carry out a diagnostic operation or a fix on a particular deployed product. All of this can be carried out while the movable platform 14 is in motion and in a location remote from the engineer, thus avoiding having to return a deployed product to a manufacturer for diagnosis and repair.

The system 10 may also be used to check the status of a deployed product. For example, an operator of a fleet of airplanes having a network 30 may contact the server 12 on a particular airplane, either directly or through the portal 24, and learn the location of and the status of that airplane. Alternatively, a manufacturer of a jet engine may access the server 12 through its network, again either directly or through the portal 24, to ascertain the condition of a particular jet engine or a particular component on the jet engine to determine when that engine or component may require servicing, and to collect data in determining product and fleet averages for improved product design and support. This can save the manufacturer unnecessary warranty, maintenance wear, and spare parts production costs.

One advantage to the system of the present disclosure is that it may be easily and cheaply installed into a vehicle. For example, the server 12 may be installed in the cabin of an aircraft, by using existing test ports already wired into the engine/airframe.

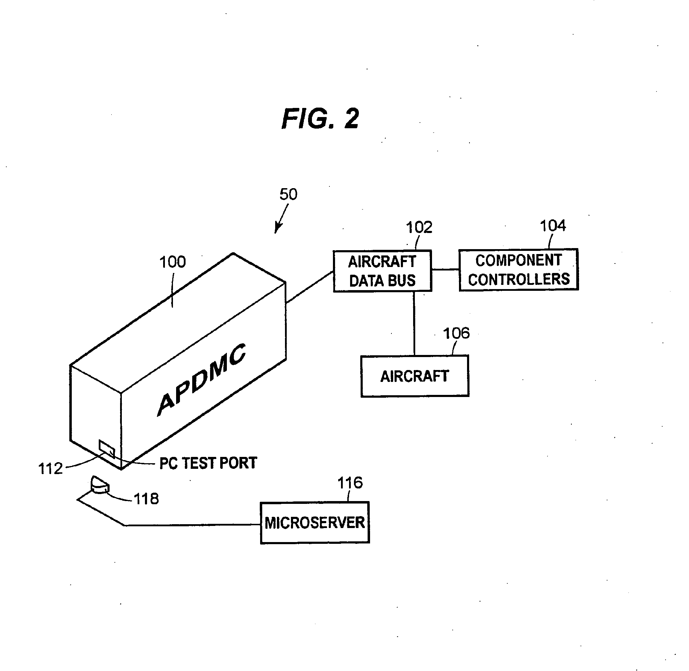

Referring now to FIG. 2, a microserver test port retrofit kit is illustrated and generally referred to by reference numeral 50. The microserver test port retrofit kit 50 provides a relatively inexpensive apparatus and method by which existing deployed products can be altered or retrofitted to include a microserver and thereby surround the entire deployed product with a wireless system or Intranet enabling the deployed products to host a web page and thus be accessible in a two-way capacity through the Internet.

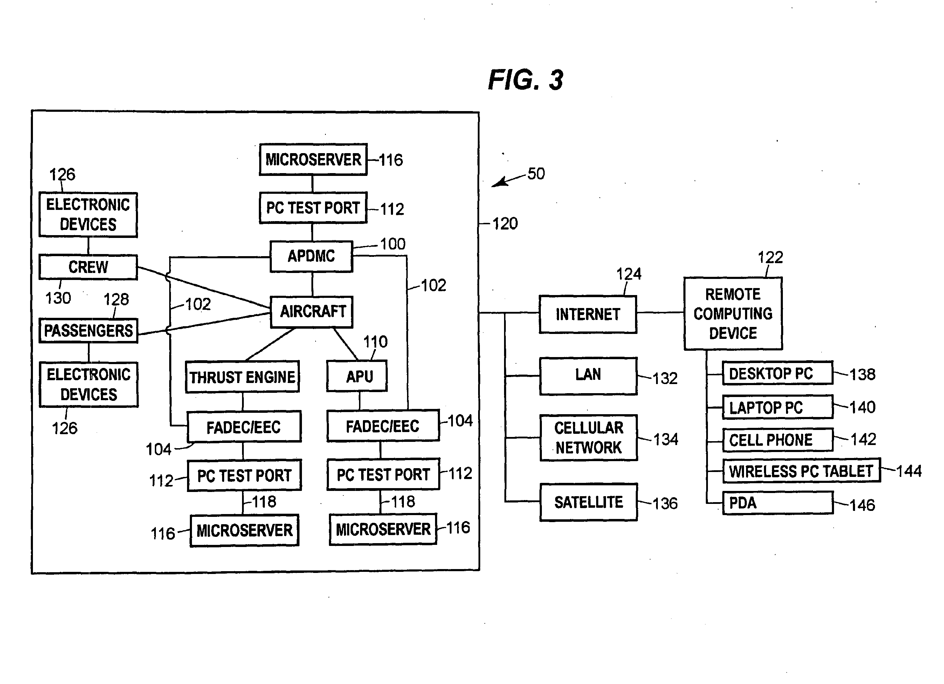

Using an aircraft as an example, one of ordinary skill in the art will readily understand that modem aircraft can include a central controller or processor 100 connected by way of a data bus 102 to a plurality of individual controllers 104 associated with various components onboard an aircraft 106. For example, as shown in FIG. 3, onboard modem aircraft, the central controller 100 is often provided in the form of an APDMC (airframe power plant data management computer) which operates under a standard industry protocol enabling various manufacturers and vendors to the aircraft industry to readily communicate with the APDMC and thus the aircraft. Similarly, one of ordinary skill in the art will understand that the individual controllers 104 could be provided in the form of a FADEC (full authority digital electronic control), the common format for controllers of gas turbine engines, but they may also be provided in the form of thrust engines 108 or auxiliary power units (APUs) 110. Such engine controllers also can be provided in the form of electronic engine controllers (EECs) and include electronic data units (EDUs) or data management units (DMUs) as is conventional in the industry. While any number of control algorithms may be employed, an EEC is basically an electronic fuel control or injector taking power and throttle commands/signals from the cockpit and adjusting engine control to provide the desired power. The EEC on other electronic control may include a plurality of cards including a motherboard slidably mounted within a rack of the EEC. The cards/boards receive inputs from the cockpit and various sensors on the engine and outputs signals to various valves and controls on the engine to effectuate its operation.

Regardless of the type of controller provided onboard the aircraft 106, each will typically be provided with at least one electronics communication port 112 enabling various computing devices to be temporarily connected thereto. For example, the port 112 may be used to connect a personal computer such as a laptop of a maintenance worker or test engineer to the controller 104. Such a connection may enable new software to be downloaded to the controller, or enable operating data to be uploaded as from the APDMC, FADEC, EEC, DMU or EDU. In alternative embodiments, the present disclosure can be used to retrofit any machine having a PC test port to include a microserver and thus be able to communicate wirelessly.

However, as the test port 112 is typically only used in a temporary capacity as when maintenance or service personnel wish to electronically couple to one of the controllers onboard the aircraft 106, such a port provides a preexisting portal through which a microserver 116 can be readily connected to the aircraft 106. In other words, rather than hard-wiring a microserver 116 directly into the FADEC/EEC 104, or the APDMC 100, a conventional connection cable 118 can simply be connected from the microserver 116 and inserted into the test port 112. In so doing, a low cost easily serviced retrofit solution is provided to enable deployed products such as aircraft 106 to be outfitted with intranet and Internet capability and wireless communication with remote locations.

More specifically, as indicated above, once the microserver 116 is connected to the deployed product, a wireless system or Intranet 120 is generated around the entire deployed product 106 enabling two-way communication with remote locations such as computing devices 122. To facilitate this communicate, as indicated above, the microserver 116 may serve as a host for a web page accessible through the Internet 124. Accordingly, individuals wishing to gain information as to the operating data generated by one of the thrust engines 108, for example, can simply log into the given website for that engine by way of the Internet 124, and the remote computing device 122, and be immediately connected to the microserver 116, and in turn be made privy to the data associated with the thrust engine 108.

It is also important to understand that once the microserver 116 is installed onboard the deployed product 106, that microserver 116 immediately serves as both a client and a server. More specifically, the microserver 116 acts as a server to each of the controllers onboard the deployed aircraft, i.e., APDMC 100, FADEC 104, and EEC 104, but also to any computing devices 126 of passengers 128 and crew 130 on board the deployed project 106. For example, a passenger onboard the aircraft 106 may bring along his or her personal digital assistant and wish to connect to the Internet to read e-mail, among other things. By providing the microserver 116 onboard the aircraft 106, a wireless system is created surrounding the aircraft 106, typically referred to as a hot spot, enabling wireless communication between the computing device 126 and the microserver 116. In this capacity, the microserver 116 is acting as a server for the computing device 126 as well as any other computing device onboard the aircraft 106. However, the microserver 116 additionally serves as a portal or client to the Internet 124 enabling the computing device 126 to access any website available through the Internet 124, and if remote computing device 122 are web-enabled, any remote computing device 122. In this capacity, it can be seen that the microserver 116 is acting as a client to the Internet 124 and thus serves as both a client and a server onboard the deployed product 106. It can therefore be seen that the microserver 116 generates a local wireless intranet in and around the deployed product capable of operating in conjunction with, or independent from, the Internet. The microserver 116 can also act as a coordinating server in communication with other computing devices, servers, and systems on board the deployed product.

To facilitate wireless communication, the microserver 116, and the wireless system 120 it generates, may access the Internet 124 by any currently known mechanism including, but not limited to, a local area network (LAN) 132, a cellular network 134, and a satellite system 136. Also, as indicated above, the remote computing device 122 can be provided in the form of any currently known or understood device including, but not limited to, desktop computers 138, laptop computers 140, cellular phones 142, wireless PC tablets 144, and personal digital assistants 146. The web page hosted by the microserver 116 may have an IP address available for various Internet protocols including, but not limited to, HTTP, FTP, SMTP, UDP, ECHO, SSH, TELNET, NAMESERVER, BOOT PS, BOOT PC, TFTP, KERBEROS, POP3, NNTP, IMAP, SNMP, BGP, IMAP3, LDAP, and HTTPS.

In operation, it can therefore be seen that the microserver test port retrofit kit taught by the pending disclosure enables existing deployed products and machines to be easily retrofitted to be Internet accessible. Using existing structure provided on the typical deployed product, a microserver can be easily connected to existing communication ports of computing devices onboard the deployed product, to generate a wireless systems surrounding the deployed product and thus enable two-way communication with the deployed product by way of the Internet.

## Claims

1. A system for communicating with a deployed product, comprising:
an electronic controller capable of communicating with the deployed product, the electronic controller including a test port;
a microserver connected to the test port, the microserver receiving data about the deployed product through the test port and hosting a web page through which the received data is accessible, the web page having an IP address available for a plurality of Internet protocols; and
a computing device remote from the deployed product, the computing device adapted to wirelessly access the microserver web page.

2. The system of claim 1, wherein the deployed product is an aircraft.

3. The system of claim 2, wherein the electronic controller is an APDMC for the aircraft.

4. The system of claim 1, wherein the deployed product is an aircraft engine.

5. The system of claim 4, wherein the electronic controller is a FADEC/EEC for the aircraft engine.

6. The system of claim 1, wherein the computing device accesses the microserver web page by way of a local area network.

7. The system of claim 1, wherein the computing device accesses the microserver web page by way of cellular network.

8. The system of claim 1, wherein the computing device accesses the microserver web page by way of satellite.

9. The system of claim 1, wherein the computing device is selected from the group of computing devices consisting of desktop computers, personal digital assistants, cellular phones, laptop computers, and wireless PC tablets.

10. The system of claim 2, wherein the microserver is a server for all computing devices on the aircraft and a client to the Internet.

11. The system of claim 1, wherein the microserver performs as a client to the Internet.

12. The system of claim 1, wherein the microserver performs as a server to the computing device remote from the deployed product.

13. The system of claim 1, wherein the microserver generates a local wireless intranet in and around the deployed product capable of operating in conjunction with the Internet, the local wireless intranet also being capable of operating independently of the Internet.

14. The system of claim 1, wherein the microserver acts as a coordinating server in communication with other computing devices, servers, and systems onboard the deployed product.

15. The system of claim 1, wherein the microserver hosts software tools for data analysis.

16. The system of claim 15, wherein the software tools for data analysis are accessible from the computing device remote from the deployed product.

17. The system of claim 1, wherein the microserver hosts technical publications about the deployed product.

18. The system of claim 17, wherein the technical publications are accessible from the computing device remote from the deployed product.

19. The system of claim 1, wherein the microserver connected to the PC test port is temporary ground-support equipment.

20. The system of claim 19, wherein the microserver employs anti-hacking security protocols.

21. The system of claim 1, wherein the microserver is communicably coupled to sensors installed on the engine.

22. The system of claim 1, wherein the microserver is hard-wired to the sensors.

23. The system of claim 1, wherein the microserver communicates with the sensors wirelessly.

24. The system of claim 1, wherein the microserver communicates by way of radio frequency identification tags.

25. The system of claim 1, wherein the microserver connects to the Internet by way of a local area network.

26. The system of claim 1, wherein the microserver connects to the Internet by way of a cellular network.

27. The system of claim 1, wherein the microserver connects to the Internet by way of satellite.

28. A communication system for deployed product, comprising:
an electronic controller, operatively associated with the deployed product, the electronic control box including a test port; and
a microserver connected to the test port, the microserver hosting a web page and generating a wireless system around the deployed product, the web page having an IP address available for a plurality of Internet protocols.

29. The deployed product of claim 28, wherein the deployed product is an aircraft.

30. The deployed product of claim 28, wherein the electronic control box is an APDMC of the aircraft.

31. The deployed product of claim 28, wherein the deployed product is an aircraft engine.

32. The deployed product of claim 31, wherein the electronic control box is a FADEC/EEC of the aircraft engine.

33. A method of communicating with a deployed product, comprising:
connecting a microserver to a test port of an electronic controller of the deployed product;
hosting a web page on the microserver, the webpage having an IP address available for a plurality of Internet protocols; and
accessing the web page wirelessly over the Internet.

34. The method of claim 33, wherein the deployed product is an aircraft.

35. The method of claim 33, wherein the deployed product is an aircraft engine.

36. The method of claim 33, wherein the electronic control box is selected from the group of electronic control boxes consisting of APDMCs, EECs, FADECs, DMUs and EDUs.

37. The method of claim 34, wherein the microserver serves as a portal through which passengers onboard the aircraft can access the Internet and computing devices remote from the aircraft can communicate with the aircraft.

38. The method of claim 33, wherein the web page is accessed using a computing device selected from the group of computing devices consisting of desktop computers, personal digital assistants, cellular phones, laptop computers, and wireless PC tablets.

39. The method of claim 33, wherein the web page is accessed over a local area network.

40. The method of claim 33, wherein the web page is accessed over a cellular network.

41. The method of claim 33, wherein the web page is accessed by satellite.

42. A retrofit kit for a deployed product having an electronic controller with a test port, comprising a microserver connected to the test port, wherein the microserver hosts a web page and generates a wireless system around the deployed product, the web page having an IP address available for a plurality of Internet protocols.
